(19) Europäisches Patentamt
European Patent Office
Office européen des brevets

(11) Numéro de publication: **0 081 426**
**A1**

(12) # DEMANDE DE BREVET EUROPEEN

(21) Numéro de dépôt: 82402194.3

(22) Date de dépôt: 01.12.82

(51) Int. Cl.³: C 03 C 27/04
B 60 R 13/06

(30) Priorité: 04.12.81 FR 8122722
04.08.82 FR 8213617

(43) Date de publication de la demande:
15.06.83 Bulletin 83/24

(84) Etats contractants désignés:
AT BE CH DE FR GB IT LI LU NL SE

(71) Demandeur: BOUSSOIS S.A.
126-130 rue Jules Guesde
F-92302 Levallois-Perret(FR)

(71) Demandeur: SOCIETE LES ADHESIFS ET INSONORISANTS MODERNES Société Anonyme
66 rue Saint-Agnan
F-58200 Cosne sur Loire(FR)

(72) Inventeur: Hochart, Paul
3 Résidence de l'Orangerie
F-78170 La Celle Saint-Cloud(FR)

(72) Inventeur: Deschamps, Bruno Résidence des Bords de Loire
49 rue Alphonse Baudin
F-58200 Cosne Sur Loire(FR)

(74) Mandataire: Bouju, André
38 Avenue de la Grande Armée
F-75017 Paris(FR)

(54) **Cordon en matière thermo-plastique pour fixer une feuille de verre, procédé pour fixer celle-ci et couche conductrice utilisée à cet effet.**

(57) Le cordon en matière thermo-plastique (3) est placé entre la feuille de verre (1) et le cadre rigide (2). Ce cordon est chauffé jusqu'à sa température de ramollissement pour obtenir le collage de celui-ci à la feuille de verre (1) et au cadre rigide (2).

Le cordon (3) est à base de copolymère d'éthylvinyl-acétate et/ou d'éthylène éthyl-acrylate présentant un point de fusion compris entre 95 et 150°C.

Utilisation notamment pour fixer par collage les pare-brise d'automobile.

FIG_1

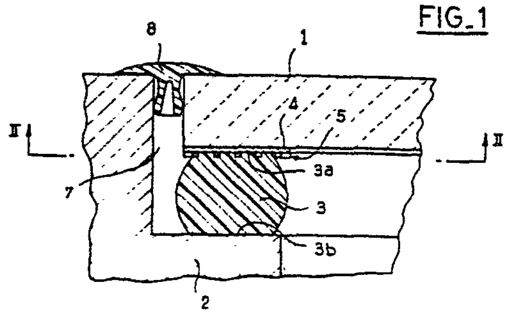


EP 0 081 426 A1

"Cordon en matière thermo-plastique pour fixer une feuille de verre, procédé pour fixer celle-ci et couche conductrice utilisée à cet effet"

La présente invention concerne un cordon en matière thermo-plastique pour fixer une feuille de verre sur un cadre rigide. Ce cordon est destiné à être placé entre la feuille de verre et le cadre et à être chauffé jusqu'à sa température de ramollissement pour obtenir le collage de ce cordon à la feuille de verre et au cadre rigide.

L'invention vise également le procédé pour coller la feuille de verre sur un cadre rigide, au moyen du cordon en matière thermo-plastique précité.

L'invention vise en outre la couche conductrice utilisée lors de la mise en oeuvre du procédé précité pour obtenir le ramollissement par chauffage du cordon en matière thermo-plastique.

La fixation des feuilles de verre sur un cadre rigide en métal, comme par exemple les pare-brise sur la baie correspondante des automobiles, a été réalisée jusqu'à présent au moyen d'un cordon en caoutchouc butyl (copolymère d'isobutylène et d'isoprène).

Selon le procédé connu, on pose le cordon sur la feuille de verre, on chauffe le cordon jusqu'à sa température de ramollissement, par effet Joule au moyen d'une résistance électrique noyée ou non dans le cordon et on applique sous pression la feuille de verre portant le cordon ramolli sur le cadre rigide.

Ce cordon en caoutchouc butyl présente de nombreux inconvénients. Sa résistance à la traction est relativement faible (inférieure à 8 $kg/cm^2$ à 20°C) de sorte que lorsqu'il est utilisé pour la fixation d'un pare-brise, il ne peut nullement participer à la rigidité du véhicule.

Par ailleurs, ce cordon en caoutchouc butyl présente surtout les inconvénients, d'une part, de ne pas posséder un point de fusion bien défini et d'autre part,

de ne pas ramollir suffisamment, à des températures comprises entre 110 et 120°C qui correspondent aux températures auxquelles il est chauffé, lors de la fixation de la feuille de verre. Pour ces raisons, on est obligé d'appliquer la feuille de verre sur le cadre rigide, à des pressions atteignant 100 kg/$m^2$ pour obtenir un collage suffisamment fiable.

Pour obtenir des pressions aussi élevées, on est obligé d'utiliser des appareils coûteux qui rendent l'ensemble du procédé onéreux et difficile à mettre en oeuvre ailleurs que sur les chaînes de montage des véhicules.

Pour chauffer ce cordon en caoutchouc butyl par effet Joule, on a proposé d'utiliser une couche conductrice telle qu'un émail conducteur préalablement déposé sur la périphérie de la feuille de verre.

La demanderesse a constaté toutefois qu'une telle couche conductrice présente une valeur ohmique dont l'écart atteint 20% sur une longueur égale à 20 cm. Un tel écart de valeur ohmique entraîne des écarts de température atteignant 40°C sur une longueur de 20 cm, ce qui aggrave encore l'inconvénient précité dû à la fusion non franche du caoutchouc butyl.

Les inconvénients précités qui entraînent des difficultés lors du montage de la feuille de verre sur son cadre rigide, subsistent également lors du démontage de cette feuille et en particulier, lorsque la couche conductrice est détériorée et est inutilisable pour permettre le chauffage par effet Joule du cordon.

Le but de la présente invention est de remédier aux inconvénients précités, en créant un cordon en matière thermo-plastique permettant de fixer une feuille de verre sur un cadre rigide et de démonter cette feuille du cadre, dans des conditions particulièrement commodes,

fiables et peu onéreuses.

Suivant l'invention, le cordon en matière plastique pour fixer une feuille de verre sur un cadre rigide, est caractérisé en ce qu'il est à base de copolymère d'éthyl-vinyl-acétate et/ou d'éthylène éthyl-acrylate présentant un point de fusion compris entre 95 et 150°C.

Le cordon à base des copolymères précités présente par rapport au cordon en caoutchouc butyl, l'avantage de présenter une fusion et un ramollissement à des températures bien définies. De plus, le ramollissement est à une température de l'ordre de 100°C tel que la feuille de verre peut. être appliquée sur le cadre rigide sous une pression inférieure à 10 kg/m$^2$ qui ne nécessite aucune presse spéciale et coûteuse.

Par ailleurs, un tel cordon présente à une température de l'ordre de 20°C, une résistance à la traction nettement supérieure à celle d'un cordon en caoutchouc butyl, de sorte que l'utilisation du cordon conforme à l'invention, dans le cas de la fixation d'un pare-brise d'automobile, contribue à accroître la rigidité de cette dernière.

Selon une version avantageuse de l'invention, le cordon comprend:

- 40 à 50% en poids de copolymère d'éthyl-vinyl-acétate et/ou d'éthylène éthyl-acrylate présentant un point de fusion compris entre 95 et 150°C.
- 0 à 10% en poids d'anhydride maléique,
- 30 à 40% en poids de résines synthétiques et naturelles,
- 20 à 30% en poids de charges minérales, peu ou non renforçantes.

Le fait de mélanger une proportion relativement faible d'anhydride maléique avec les composés précités permet de renforcer l'adhésion du cordon.

Un tel cordon présente une résistance à la traction de :

- 5 à 8 $kg/cm^2$ à -20°C;
- 20 $kg/cm^2$ à 20°C;
- 6 $kg/cm^2$ à 60°C;
- 2 $kg/cm^2$ à 75°C;
- 0,8 $kg/cm^2$ à 85°C.

Pour coller une feuille de verre sur un cadre rigide, au moyen du cordon conforme à l'invention, conformément au procédé selon l'invention, on pose le cordon sur la feuille de verre, on chauffe le cordon jusqu'à sa température de ramollissement et on applique sous pression la feuille de verre portant le cordon ramolli sur le cadre rigide.

Selon une version préférée de ce procédé, on chauffe le cordon jusqu'à une température comprise entre 100 et 120°C et on applique la feuille sur ce cordon sous une pression inférieure à 10 $kg/m^2$.

L'utilisation d'une pression inférieure à 10 $kg/m^2$ rend la mise en oeuvre du procédé facile et peu onéreuse.

Le chauffage du cordon jusqu'à sa température de ramollissement peut être réalisé par effet Joule, au moyen d'un élément résistant appliqué à la périphérie du cordon ou une couche conductrice de laque ou d'émail conducteur, ou un ruban métallique autoadhésif appliqué à la périphérie de la feuille de verre.

Le chauffage du cordon peut encore être réalisé par soufflage d'air chaud, par micro-ondes ou mieux par rayonnement infra-rouge. Ce mode de chauffage est particulièrement indiqué pour démonter la feuille de verre du cadre, lorsque l'élément résistant est détérioré.

On peut également chauffer par infra-rouge le cordon et le bord de la baie de la carrosserie du véhicule, avant collage de la feuille de verre.

Selon un autre aspect de l'invention, la couche de laque ou d'émail conducteur préalablement déposée sur la périphérie de la feuille de verre est constituée par une multitude de minces filaments conducteurs séparés et se croisant mutuellement.

L'expérience a montré qu'une couche conductrice ainsi conformée présentait suivant sa longueur une valeur ohmique beaucoup plus stable que les couches en forme de bandes pleines connues.

Une telle configuration de la couche conductrice peut être réalisée aisément par dépôt sérigraphique.

D'autres particularités et avantages de l'invention apparaîtront encore dans la description qui va suivre.

Aux dessins annexés, donnés à titre d'exemples non limitatifs:

- la figure 1 est une vue en coupe transversale d'un cordon en matière thermo-plastique conforme à l'invention, placé entre une feuille de verre et un cadre rigide;

- la figure 2 est une vue en coupe suivant le plan II-II de la figure 1, le cordon étant enlevé.

Dans la réalisation de la figure 1, la feuille de verre 1 qui peut être un pare-brise d'automobile est fixée au cadre métallique 2, au moyen d'un cordon 3 en matière thermo-plastique. Les surfaces opposées 3a et 3b de ce cordon sont collées respectivement à la feuille de verre 1 et au cadre 2. Ce collage est obtenu par chauffage du cordon 3 jusqu'à sa température de ramollissement.

Conformément à l'invention, ce cordon 3 est à base de copolymère d'éthyl-vinyl-acétate et/ou d'éthylène éthyl-acrylate présentant un point de fusion compris entre 95 et 150 °C qui peut être déterminé par la méthode dite "bille-anneau".

Le cordon 3 peut être réalisé entièrement par ces polymères ou peut être mélangé avec des résines synthétiques aromatiques et/ou aliphatiques, des résines naturelles,

de l'anhydride maléique, des charges minérales, et des agents de protection et d'adhérence comme indiqué ci-après:

- polymère d'éthyl-vinyl-acétate et/ou d'éthylène éthyl-acrylate présentant un point de fusion compris entre 95 et 150°C : 40 à 50% en poids.
- anhydride maléique : 0 à 10% en poids.
- résines synthétiques et naturelles : 0 à 40% en poids.
- charges minérales et agents de protection et d'adhérence : 20 à 30% en poids.

Un cordon constitué par le mélange des composés précités présente la résistance à la traction indiquée ci-après :

- 5 à 8 $kg/cm^2$ à -20°C ;
- 20 $kg/cm^2$ à 20°C ;
- 6 $kg/cm^2$ à 60°C ;
- 2 $kg/cm^2$ à 75°C ;
- 0,8 $kg/cm^2$ à 85°C.

La dureté Shore A est comprise entre 50 et 70 à 20°C.

On donne ci-après deux exemples de composition d'un cordon thermo-plastique ayant donné d'excellents résultats :

Exemple 1 :
- polymère d'éthyl-vinyl-acétate (point de fusion franc supérieur ou égal à 95°C) : 40 à 50% en poids
- résine synthétique de type aromatique présentant un point de ramollissement compris entre 85 et 160°C, telle que de l'$\alpha$ ou $\beta$ styrène et résine naturelle telle que la collophane : 30 à 40% en poids
- caoutchouc butyl : 5 à 15% en poids
- charges minérales non renforçantes (mica, craie) et agents de protection et d'adhérence (silane, altophane) : 20 à 30% en poids

- noir de carbone : 5% en poids.

Exemple 2 :
- copolymère d'éthylène-éthyl-acrylate (point de fusion franc supérieur ou égal à 95°) : 45% en poids.
- anhydride maléique : 5% en poids.
- noir de carbone : 20% en poids
- résines synthétiques et naturelles (styrène, collophane par exemple) : 30% en poids.

Le copolymère d'éthyl-vinyl-acétate a pour formule :

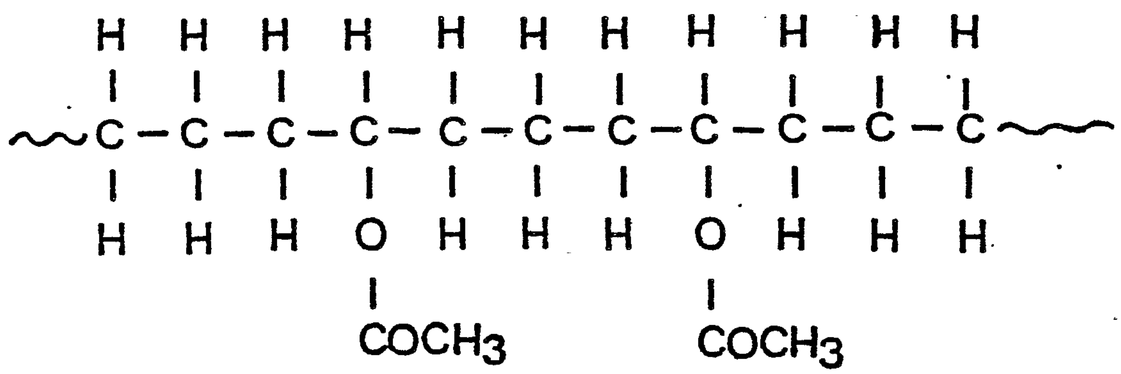

Le copolymère d'éthylène-éthyl-acrylate a pour formule :

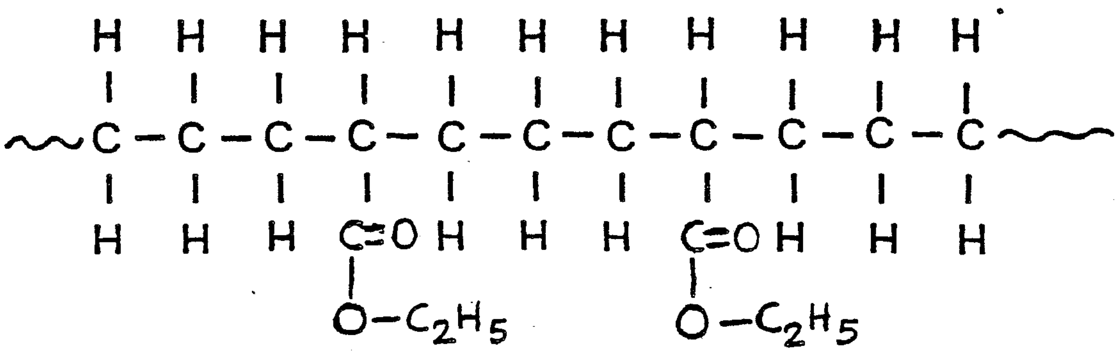

On peut greffer à ce copolymère de l'anhydride maléique auquel cas le motif suivant :

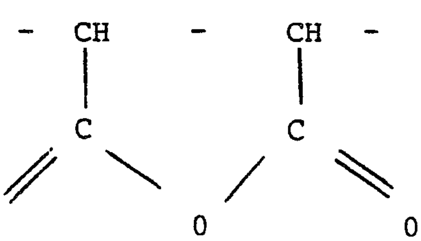

s'intercale entre les deux motifs ci-dessus pour donner un terpolymère.

Dans ces exemples, le cordon 3 possède un diamètre de l'ordre de 10 mm.

Les copolymères précités se caractérisent par des taux d'acétate ou d'éthyl-acrylate compris entre 15 et 40% et de préférence entre 28 et 30 ainsi que par leur indice d'écoulement (melt index) compris entre 2 et 400 et de préférence entre 8 et 50.

Dans la réalisation des figures 1 et 2, la périphérie de la feuille de verre est revêtue sur sa face adjacente au cordon 3, par deux couches successives 4, 5. La couche 4 adjacente à la feuille de verre est une couche d'émail ou de laque colorée par exemple en noir, qui masque le cordon 3 de l'extérieur.

La couche 5 adjacente au cordon 3 est une couche d'émail rendue conductrice par de la poudre d'argent qui représente 40 à 80% du poids total de l'émail.

Cette couche 5 présente d'autre part, la particularité (voir figure 2) d'être constituée d'une multitude de minces filaments 6 séparés et se croisant mutuellement à la manière d'un treillis.

La largeur totale de la couche conductrice 5 est comprise entre 1,5 et 2 cm. La largeur des filaments 6 peut varier entre 100 et 500 microns et leur épaisseur entre 20 et 60 microns.

Les meilleurs résultats ont été obtenus lorsque les filaments 6 présentaient les dimensions suivantes:

- largeur: 300 microns;
- épaisseur: 40 microns.

Une couche conductrice en émail chargée de poudre d'argent présentant une longueur égale à 360 cm, conforme à l'exemple précité, possède une résistance égale à 2 ohms. L'écart de la valeur ohmique ne dépasse pas ± 5% sur une longueur de 20 cm.

La couche 5 ainsi conformée peut être appliquée aisément sur la périphérie de la feuille de verre par dépôt sérigraphique.

On va maintenant exposer le procédé conforme à l'invention, pour coller la feuille de verre 1 sur le cadre rigide 2.

On commence par poser le cordon 3 sur la couche conductrice 5. Celle-ci ne reçoit aucun primaire d'adhérence.

On branche aux extrémités de cette couche 5 un générateur de courant électrique de façon à obtenir un échauffement par effet Joule.

A titre d'exemple, lorsqu'on applique aux bornes de cette couche 5 qui présente une valeur ohmique de 2 ohms, une tension de 48 Volts, on obtient au départ un courant de 12 ampères.

Après 1 mn 30, la température au centre du cordon 3 atteint 100 à 120°C et celle-ci est pratiquement constante sur toute la longueur de ce cordon. A ces températures, on obtient pour le cordon 3 des conditions de ramollissement optimales et on ne constate aucune trace de fluage.

La surface 3a du cordon 3 épouse alors intimement celle de la couche conductrice 5, en pénétrant dans les cavités comprises entre les filaments 6 de cette dernière, ce qui a pour effet d'améliorer l'adhérence.

Pour terminer l'opération, il suffit de presser légèrement la feuille de verre 1 vers le cadre 2. La pression d'appui sur la feuille de verre reste dans tous les cas inférieure à 10 $kg/m^2$.

Après interruption du courant, le cordon 3 durcit rapidement et colle fortement à la fois au cadre 2 et à la feuille de verre 1.

En fin d'opération, on peut masquer l'espace 7 compris entre le bord de la feuille de verre et le cadre 2 par un joint 8 en matière plastique (voir figure 1).

Pour démonter la feuille de verre 1, par exemple lorsque celle-ci est cassée, mais où la couche conductrice 5 n'est pas interrompue, il suffit de renouveler l'opération précitée, c'est-à-dire d'appliquer aux bornes de cette couche 5 la tension nécessaire pour ramollir le cordon 3. Une fois celui-ci ramolli, la feuille de verre 1 s'enlève très facilement.

Lorsque la couche conductrice 5 est interrompue, le ramollissement du cordon 3 peut être obtenu en plaçant à une distance comprise entre 10 et 15 cm de ce cordon, des tubes chauffants infra-rouge de puissance comprise entre 5 et 10 kW.

Bien entendu, l'invention n'est pas limitée aux exemples que l'on vient de décrire et on peut apporter à ceux-ci de nombreuses modifications, sans sortir du cadre de l'invention.

Ainsi, l'invention peut également s'appliquer à la pose des lunettes arrières et des glaces latérales d'automobiles et à tout vitrage sur cadre métallique dans le bâtiment.

Le ramollissement du cordon 3 peut être obtenu lors de la pause de la feuille de verre 1, sans l'utilisation de la couche conductrice 5, au moyen d'éléments chauffants placés à l'extérieur de la feuille de verre, tels que des tubes infra-rouge.

La couche conductrice 5 au lieu d'être réalisée en émail chargé de poudre conductrice, peut être constituée par une laque conductrice durcissant à la température ambiante, ou sous l'action de la chaleur.

Cette couche conductrice 5 peut également être obtenue par un dépôt métallique réalisé par pulvérisation, électrolyse ou évaporation sous vide.

Le chauffage du cordon 3 peut encore être réalisé par effet Joule au moyen d'une bande conductrice métallisée autocollante appliquée sur la périphérie de la feuille

de verre. Ce chauffage peut également être effectué par micro-ondes ou par soufflage d'air chaud.

Les pare-brise et lunettes arrières peuvent être livrés aux utilisateurs séparés de leur cordon 3 de collage. Toutefois, ce cordon 3 peut également être précollé sur les pare-brise et lunettes arrières.

REVENDICATIONS

1. Cordon (3) en matière thermo-plastique pour fixer une feuille de verre (1) sur un cadre rigide (2), ce cordon étant destiné à être placé entre la feuille de verre et le cadre et à être chauffé jusqu'à sa température de ramollissement pour obtenir le collage de ce cordon à la feuille de verre et au cadre rigide, caractérisé en ce que ce cordon (3) est à base de copolymère d'éthyl-vinyl-acétate et/ou d'éthylène éthyl-acrylate présentant un point de fusion compris entre 95 et 150 °C.

2. Cordon conforme à la revendication 1, caractérisé en ce qu'il comprend:

- 40 à 50 % en poids de polymère d'éthyl-vinyl-acétate et/ou d'éthylène éthyl- acrylate, présentant un point de fusion compris entre 95 et 1 0 °C;
- 0 à 10% en poids d'anhydride maléique ;
- 30 à 40% en poids de résines synthétiques et naturelles;
- 20 à 30% en poids de charges minérales peu ou non renforçantes et d'agents de protection et d'adhérence.

3. Cordon conforme à l'une quelconque des revendications 1 ou 2, caractérisé en ce qu'il présente une résistance à la traction:

- comprise entre 5 et 8 kg/cm$^2$ à -20°C, égale à 20 kg/cm$^2$ à 20°C, à 6 kg/cm$^2$ à 60°C, à 2 kg/cm$^2$ à 75°C et à 0,8 kg/cm$^2$ à 85°C, et une dureté Shore comprise entre 50 et 70 à 20°C.

4. Procédé pour coller une feuille de verre (1) sur un cadre rigide (2) au moyen du cordon (3) conforme à l'une quelconque des revendications 1 à 3, dans lequel on pose le cordon sur la feuille de verre, on chauffe ce cordon jusqu'à sa température de ramollissement, et on applique sous pression la feuille de verre portant le cordon sur le cadre, caractérisé en ce qu'on chauffe ce cordon jusqu'à une température comprise entre 100 et 120°C

et on applique la feuille sur le cadre sous une pression inférieure à 10 $kg/m^2$.

5. Procédé conforme à la revendication 4, caractérisé en ce que le cordon (3) est chauffé par rayonnement infra-rouge.

6. Procédé conforme à la revendication 4, caractérisé en ce que le chauffage du cordon (3) est réalisé au moyen d'une couche (5) conductrice de laque ou d'émail conducteur préalablement déposée sur la périphérie de la feuille de verre (1), cette couche étant parcourue par un courant électrique permettant de chauffer celle-ci par effet Joule.

7. Couche conductrice utilisée dans le procédé conforme à la revendication 6,caractérisée en ce qu'elle est constituée par une multitude de minces filaments conducteurs (6) séparés et se croisant mutuellement.

8. Couche conductrice conforme à la revendication 7,caractérisée en ce que les filaments conducteurs (6) présentent une configuration en treillis.

9. Couche conductrice conforme à l'une quelconque des revendications 7 ou 8, caractérisée en ce que l'épaisseur des filaments conducteurs (6) est comprise entre 20 et 60 microns et leur largeur est comprise entre 100 et 500 microns.

10. Couche conductrice conforme à l'une quelconque des revendications 7 à 9, la couche conductrice (5) étant constituée par un émail conducteur, caractérisée en ce que les filaments (6) de cette couche sont déposés sur la périphérie de la feuille (1) par dépôt sérigraphique.

11. Couche conductrice conforme à l'une quelconque des revendications 7 à 10, caractérisée en ce que sa valeur ohmique présente un écart inférieur à 5% sur une longueur de 20 cm.

12. Pare-brise ou lunette arrière d'automobile, caractérisé en ce qu'il est collé sur un cadre rigide (2) de l'automobile au moyen d'un cordon (3) conforme à l'une quelconque des revendications 1 à 3.

FIG_1

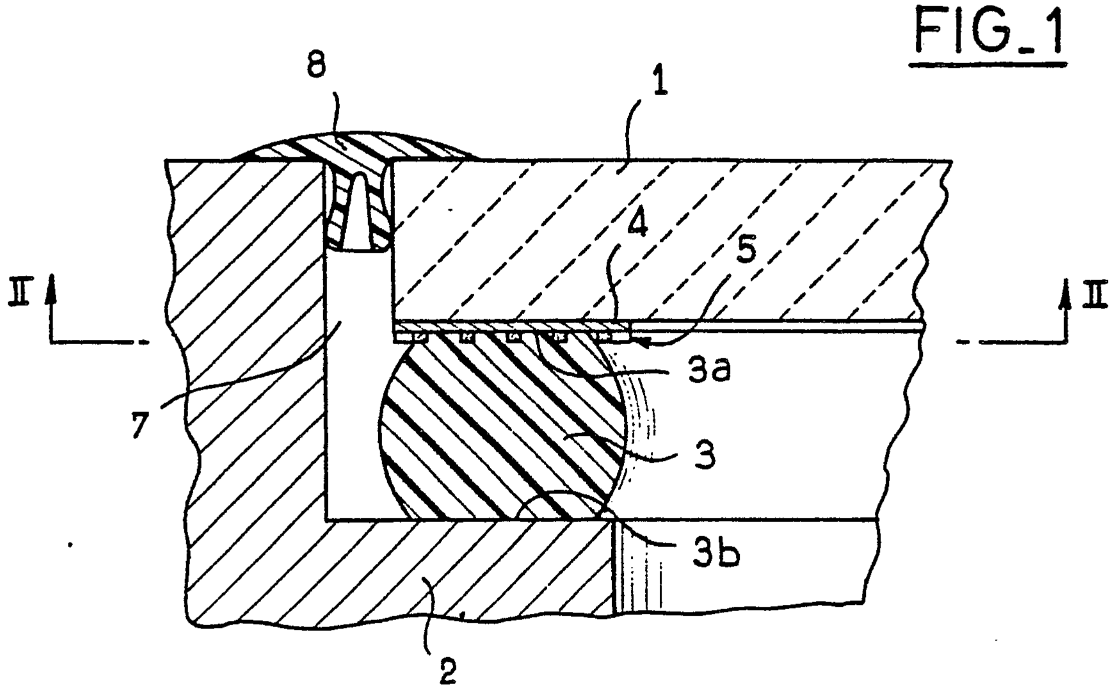


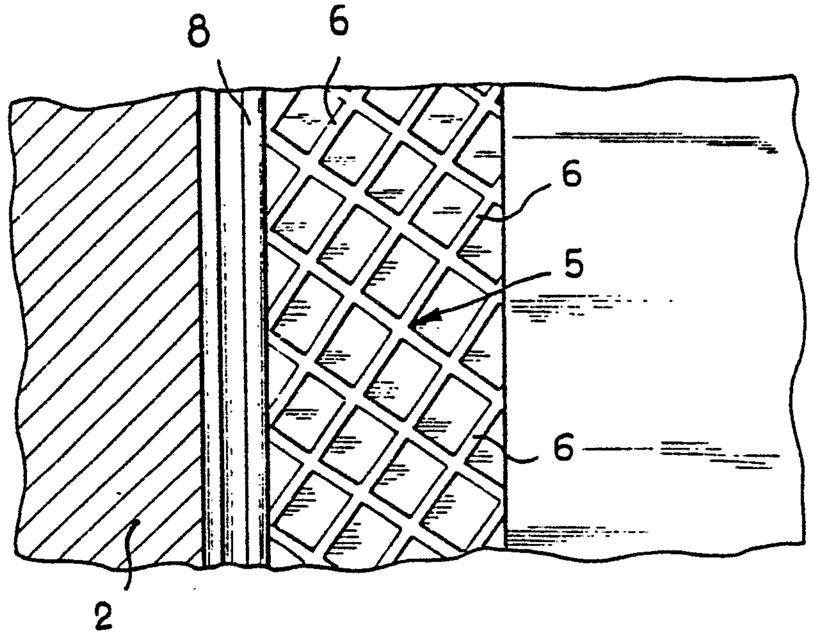


FIG_2

Office européen des brevets

**RAPPORT DE RECHERCHE EUROPEENNE**

0081426
Numéro de la demande

EP 82 40 2194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 345 737 (MIRODAN)<br>*Page 13, ligne 19 - page 14, ligne 7; page 2, lignes 24-26; page 3, lignes 17-29*<br>--- | 1,2 | C 03 C 27/04<br>B 60 R 13/06 |
| Y | FR-A-1 483 736 (W.R.GRACE & CO.)<br>*Résumé 8-10; exemples 1-6; page 4, colonne de gauche, lignes 1-31*<br>--- | 1,2 | |
| Y | FR-A-1 541 360 (DRAFTEX LIMITED)<br>*Résumé; figure 1*<br>--- | 1,4,12 | |
| Y | DE-C- 974 916 (J.G.TRUMP)<br>*Revendication 1; page 3, lignes 47-61*<br>--- | 1 | **DOMAINES TECHNIQUES RECHERCHES (Int. Cl. 3)** |
| E | FR-A-2 492 478 (BOUSSOIS S.A.)<br>*Figure 1; page 4, lignes 15-30; page 5, lignes 1-7; page 11, ligne 2*<br>----- | 1,4-6,<br>10,12 | C 03 C 27/00<br>E 06 B 3/00<br>B 50 R 13/00 |

Le présent rapport de recherche a été établi pour toutes les revendications

| Lieu de la recherche | Date d'achèvement de la recherche | Examinateur |
|---|---|---|
| LA HAYE | 09-03-1983 | BOUTRUCHE J.P.E. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant